## Europäisches Patentamt

## European Patent Office

## Office européen des brevets

(19)

(11) Veröffentlichungsnummer: **0 273 932**
**B1**

(12) **EUROPÄISCHE PATENTSCHRIFT**

(45) Veröffentlichungstag der Patentschrift: **05.09.90**

(51) Int. Cl.⁵: **B 23 Q 3/157**

(21) Anmeldenummer: **87904030.1**

(22) Anmeldetag: **30.06.87**

(86) Internationale Anmeldenummer:
**PCT/DE87/00291**

(87) Internationale Veröffentlichungsnummer:
**WO 88/00510 28.01.88 Gazette 88/03**

(54) WERKZEUGWECHSELVORRICHTUNG FÜR WERKZEUGMASCHINEN.

(30) Priorität: **10.07.86 DE 3623201**

(43) Veröffentlichungstag der Anmeldung:
**13.07.88 Patentblatt 88/28**

(45) Bekanntmachung des Hinweises auf die
Patenterteilung:
**05.09.90 Patentblatt 90/36**

(84) Benannte Vertragsstaaten:
**AT BE CH DE FR GB IT LI NL SE**

(56) Entgegenhaltungen:
**EP-A-0 142 850**
**DE-A-1 602 896**
**DE-A-2 000 998**
**DE-A-2 264 080**
**DE-A-3 001 396**
**DE-A-3 440 356**

**Soviet Inventions Illustrated, Derwent
Publications Ltd, sections General/Mechanical,
accession No. K6683E/32, 22 September 1982**

(73) Patentinhaber: **WOTAN-WERKE G.M.B.H.
Am Trippelsberg 92
D-4000 Düsseldorf (DE)**

(72) Erfinder: **DAVID, Klaus
Heinrich-Lersch-Strasse 17
D-4000 Düsseldorf 13 (DE)**

(74) Vertreter: **Koscholke, Gotthold, Dr.-Ing. et al
Rheinallee 147
D-4000 Düsseldorf 11 (DE)**

(56) References cited:
**Soviet Inventions Illustrated, Derwent
Publications Ltd, sections General/Mechanical,
accession No. G.2421D/27, 12 August 1981
Werkstatt und Betrieb, 114 Jahrgang, Nr. 12,
Dezember 1981 (München, DE); J. SCHERER:
"Werkzeug- und Werkstückwechsler führen zu
kurzen Nebenzeiten", siehe Seite 862; Figur 17**

Courier Press, Leamington Spa, England.

**Beschreibung**

Die Erfindung bezieht sich auf eine Werkzeugmaschine mit Werkzeugwechselvorrichtung nach dem Oberbegriff des Anspruchs 1 und des Anspruchs 7.

Bei Horizontal-Bohr- und Fräswerken und ähnlichen Werkzeugmaschinen ist es bekannt, eine Anzahl von Werkzeugem in einem Ketten-Magazin unterzubringen, das am Maschinenständer in vertikaler Anordnung angebracht ist (z.B. DEC-2 064 863). Bei dieser bekannten Maschine befindet sich das vertikale Magazin an der Rückseite des Ständers.

Ein solches am Ständer befindliches Ketten-Magazin kann nur eine begrenzte Zahl von Werkzeugen aufnehmen. Außerdem ist das Magazin nicht leicht zugänglich, so daß zum Bestücken der einzelnen Plätze des Magazins bzw. zum Austauschen von Werkzeugen meist ein besonderer Aufwand erforderlich ist.

Weiterhin ist es bekannt, ein horizontales Ketten-Magazin mit Bezug auf eine Bewegung des Ständers in Richtung parallel zur Arbeitsspindel feststehend anzuordnen. Für den Werkzeugwechsel sind dann größere Ständerbewegungen notwendig, um eine Übergangsstelle zu haben, damit ein Werkzeug dort vom Greifer des Wechslers erfaßt werden kann. Diese Bewegungen bedingen entsprechend große Nebenzeiten.

Ferner ist eine Werkzeugmaschine mit einem vertikal an einem Ständer verschiebbaren, eine horizontale Arbeitsspindel enthaltenden Spindelstock und mit einer automatischen Werkzeugwechsel-Vorrichtung bekannt (SU-A-872185), bei der ein Trommel-Werkzeugmagazin feststehend auf dem Maschinengestell angebracht ist. Ein unabhängig vom Spindelstock vertikal bewegbarer Support trägt einen mit einem Werkzeuggreifer versehenen Wechslerschlitten, der mittels eines in ihm vorgesehenen Antriebs und eines in eine Zahnstange am Support eingreifenden Zahnrades an Führungen des Supports verfahrbar ist. Am Spindelstock befindet sich eine Fortsetzung dieser Führungen. Die Anordnung ist so, daß der Wechslerschlitten sich einerseits an den Führungen des Supports bis zu dem seitlichen Werkzeugmagazin bewegen kann und daß er andererseits, wenn die Support-Führungen mit den Führungen am Spindelstock auf gleicher Höhe sind, bis zu einer Position nahe der Arbeitsspindel fahren kann und dann vom Spindelstock gehalten ist.

Bei einer solchen Werkzeugmaschine mit Werkzeugwechselvorrichtung kann der Wechsler nur dann während eines laufenden Bearbeitungsvorganges ein Werkzeug an das Magazin abgeben bzw. ein Werkzeug aus diesem entnehmen, wenn der Ständer keine Bewegungsmöglichkeit in einer zur Richtung der Arbeitsspindel parallelen Maschinenachse (W-Achse) hat oder wenn — er bei Verschiebbarkeit in der W-Achse — während des jeweiligen Bearbeitungsvorganges die ganz bestimmte Position eingenommen hat, die einzig und allein ein Zusammenarbeiten des Wechslers mit dem festen Magazin gestattet, und wenn er während der Bearbeitung in dieser Position auch verbleibt. Würde sich der Ständer während einer Bearbeitung in einer anderen Position längs der W-Achse befinden, wäre kein Zusammenarbeiten des Wechslers mit dem Magazin möglich. Vielmehr müßte der Ständer nach Beendigung einer Bearbeitungsoperation in die Position verfahren werden, in der der Wechsler ein Werkzeug in das Magazin zurückgeben und aus diesem ein neues Werkzeug entnehmen kann. Dies wäre der weiter oben schon genannte Fall.

Es ist schließlich noch eine Werkzeugmaschine bekannt (DE-A-3 001 396), die einen mehrere Werkzeugträger aufnehmenden Kopf und einen Magazinwagen mit einem kettenartigen Endlosförderer für die verschiedenen Werkzeugträger aufweist. Zwischen der Werkzeugmaschine und dem Endlosförderer des Magazinwagens läßt sich eine lösbare Antriebsverbindung herstellen. Die Werkzeugmaschine hat einen auf einem Bett nur in der Maschinenachse X mittels eines Getriebemotors über eine Gewindespindel verschiebbaren Ständer. Wird dieser in der X-Achse bewegt, so kann über mechanische Zwischenglieder der Endlosförderer eines angekuppelten Magazinwagens synchron zum Ständer verfahren werden. Der Magazinwagen ist auf der Rückseite der Maschine vorgesehen. Die Maschine hat keinen Spindelstock mit Arbeitsspindel, sondern weist auf der Vorserseite des Ständers einen vertikal verstellbaren Getriebekasten auf. Bei den Werkzeugträgern handelt es sich um komplette Werkzeugköpfe mit eigener Spindellagerung und integriertem Werkzeug. Es ist kein Greifersystem wie bei Einzelwerkzeugen mit Kegelschaft vorhanden, sondern es handelt sich um ein System für vollständige Aggregate.

Mit der Erfindung soll bei einer Werkzeugmaschine mit Werkzeugwechselvorrichtung der eingangs genannten Art ein günstiger Weg eröffnet werden, um auch bei einer Bewegungsmöglichkeit des Ständers in einer zur Richtung der Arbeitsspindel parallelen Maschinenachse einerseits eine größere Anzahl von Werkzeuge unmittelbar an der Maschine im direkten Zugriff zur Verfügung zu haben und andererseits für den Vorgang des Wechselns von Werkzeugen möglichst wenig an Zeit für produktives Arbeiten der Maschine verlorengehen zu lassen. Mit anderen Worten, bei großem Werkzeugangebot soll zugleich eine besonders gute effektive Nutzung der Maschine für die Bearbeitung von Werkstükken im Verhältnis zum Zeitbedarf für den Werkzeugwechsel erreicht werden.

Gemäß der Erfindung ist bei einer Werkzeugmaschine der eingangs genannten Art das Werkzeugmagazin als Ketten-Magazin horizontal an einem Bettschlitten angeordnet, auf dem ein Ständerschlitten mit dem Ständer in einer parallel zur Arbeitsspindel gerichteten Maschinenachse verschiebbar ist, und es ist die Kette dieses horizontalen Werkzeugmagazins den Bewegungen des Ständers in Richtung der zur Arbeitsspindel parallelen Maschinenachse nachführbar, derart, daß eine jeweilige Positionierung eines Aufnahmeplatzes an der übergabestelle ungeachtet einer Ständerbewegung erhalten bleibt.

Die Ketten-Ebene des horizontalen Werkzeugmagazins, d.h. die durch die Umlenkräder und die sich zwischen diesen erstreckenden Kettenbereiche gehende Ebene, steht üblicherweise vertikal, ohne daß andere Anordnungen grundsätzlich ausgeschlossen sind, und ist bei einer vorteilhaften Ausführung parallel zur Bewegungsebene des Spindelstockes am Ständer gerichtet. Der Kettenverlauf ist unabhängig von der Anordnung im einzelnen parallel zur Bewegungsrichtung des Ständers.

Die vom Greifersystem des Wechslers erreichbare übergabestelle liegt vorteilhaft im Bereich des oberen Trums der Kette des horizontalen Ketten-Magazins.

Der Wechsler kann den jeweiligen Gegebenheiten angepaßt sein. Zweckmäßig weist er einen zwischen der übergabestelle am horizontalen Ketten-Magazin und einer übergabestelle nahe der Arbeitsspindel hin und her bewegbaren Schlitten od.dgl. auf. Die Führungen für den letzteren können sich insbesondere an einem vertikal verschiebbaren Tragschlitten befinden und sich von einer Seite des Ständers zu einer beanchbarten anderen Seite des Ständers erstrecken.

In weiterer vorteilhafter Ausgestaltung ist außer dem horizontalen Ketten-Magazin am Ständer ein weiteres Werkzeugmagazin vorgesehen, wobei der Wechsler zum Arbeiten mit beiden Magazinen eingerichtet ist.

Die Aufnahmeplätze für Werkzeuge können bei diesem weiteren Werkzeugmagazin an einem beweglichen oder an einem festen Teil vorgesehen sein. Das Magazin kann also ein Ketten-, Trommel-Magazin od.dgl. oder ein Leisten-Magazin od.dgl. sein.

Die Erfindung richtet sich weiterhin auf eine Werkzeugmaschine mit Werkzeugwechselvorrichtung, die sich dadurch kennzeichnet, daß das Werkzeugmagazin als Ketten-Magazin horizontal an einem Bettschlitten angeordnet ist, auf dem ein Ständerschlitten mit dem Ständer in einer parallel zur Arbeitsspindel gerichteten Maschinenachse verschiebbar ist, daß außer diesem horizontalen Ketten-Magazin am Ständer ein vertikales Ketten-Magazin angeordnet ist, daß der Wechsler zum Arbeiten mit dem vertikalen Ketten-Magazin eingerichtet ist, wobei dessen Kette den Bewegungen des Spindelstockes mit dem Wechsler nachführbar ist, derart, daß eine jeweilige Positionierung eines Aufnahmeplatzes relativ zum Spindelstock ungeachtet einer Bewegung des letzteren erhalten bleibt, und daß zwischen dem horizontalen Ketten-Magazin und dem vertikalen Ketten-Magazin eine Werkzeug-übergabevorrichtung angeordnet ist, mittels derer Werkzeuge aus einem in das andere Magazin überführbar sind, wobei die Werkzeug-übergabevorrichtung am Ständer oder einem sich mit diesem bewegenden Teil angebracht ist und die Kette des horizontalen Werkzeugmagazins den Bewegungen des Ständers in Richtung der zur Arbeitsspindel parallelen Maschinenachse nachführbar ist, derart, daß eine jeweilige Positionierung eines Aufnahmeplatzes relativ zur Werkzeug-übergabevorrichtung ungeachtet einer Ständerbewegung erhalten bleibt.

Die Werkzeug-übergabevorrichtung ist zweckmäßig auf der der Arbeitsseite der Maschine abgewandten Seite angeordnet.

Mit der Erfindung ist eine Werkzeugmaschine mit Werkzeugwechselvorrichtung geschaffen, die sich durch eine Reihe wesentlicher Vorteile auszeichnet.

Bei einer Werkzeugmaschine mit "kreuzbeweglichem" Ständer, d.h. einem Ständer, der quer in der X-Maschinenachse (Bettschlitten-Bewegung) und längs in der W-Maschinenachse (Ständerschlitten-Bewegung) verstellt werden kann, ist ein direkter Zugriff zu einer sehr großen Zahl von Werkzeugen möglich gemacht. Dabei kann der Zeitaufwand für den Wechselvorgang gering gehalten werden. Weil der überwiegende Teil der für den Werkzeugwechsel notwendigen Bewegungen während des effektiven Einsatzes der Maschine erfolgt, also während einer Bearbeitung eines Werkstückes, ergibt sich eine günstige Ausnutzung der Maschine, auch bei häufigem Werkzeugwechsel. Die Werkzeuge können ungeachtet der Ständerposition jeweils in der Bearbeitungszeit herangeführt und in einer Bereitstellungsposition zur übergabe an die Arbeitsspindel gehalten werden.

Das horizontale Ketten-Magazin kann sich verhältnismäßig weit nach vorne in Richtung auf den Arbeitsraum der Maschine erstrecken, wodurch die Aufnahmekapazität für Werkzeuge noch erhöht wird. Das Magazin läßt sich ohne weiteres so anordnen, daß es unmittelbar vom Boden aus erreichbar ist. Insbesondere ist das hintere Ende dieses Magazins, d.h. der hintere Umlenkpunkt der Kette desselben als Bestückungsstelle vorgesehen.

Um die Vielseitigkeit des Systems noch zu vergrößern, kann wenigstens ein weiteres Werkzeugmagazin in der Nähe des hinteren Endes des horizontalen Ketten-Magazin vorgesehen sein, wobei zwischen den Magazinen eine Werkzeug-übergabevorrichtung vorhanden ist. Die letztere kann je nach den Erfordernissen und Gegebenheiten feststehend oder bewegbar sein, insbesondere in einer Richtung parallel zu einer quer zur Arbeitsspindel verlaufenden Maschinenachse. Letzteres kommt namentlich dann in Betracht, wenn das horizontale Ketten-Magazin eine Bewegung in dieser Maschinenachse ausführen kann, etwa mit dem es tragenden Bettschlitten, und/oder wenn mehrere weitere Werkzeugmagazine vorhanden sind, mit denen die übergabevorrichtung zusammenarbeiten soll.

Es kann vorteilhaft sein, die Ausbildung so zu treffen, daß die Werkzeug-übergabevorrichtung und ein das horizontale Ketten-Magazin tragender Teil zweitweise synchron bewegbar sind.

Als weiteres Werkzeugmagazin kommt sowohl ein Ketten-, Trommel- als auch ein Regalmagazin od.dgl. in Betracht. Zum Zusammenarbeiten mit einem Regalmagazin od.dgl. weist die Werkzeug-übergabevorrichtung vorteilhaft einen höhenverstellbaren Teil auf. Die Werkzeug-übergabevorrichtung kann auch ein Roboter sein.

Weitere Einzelheiten, Merkmale und Vorteile der Erfindung ergeben sich aus der nachstehenden Erläuterung von Ausführungsbeispielen, aus der zugehörigen Zeichnung und aus den Ansprüchen. Es zeigen:

Fig. 1 ein Horizontal-Bohr- und Fräswerk mit Werkzeugwechselvorrichtung in Stirnansicht,

Fig. 2 ein Horizontal-Bohr- und Fräswerk mit Werkzeugwechselvorrichtung in Seitenansicht,

Fig. 3 die Maschine nach Fig. 2 in Draufsicht und

Fig. 4 eine andere Ausführung der Werkzeugwechselvorrichtung in einer der Figur 2 entsprechenden Seitenansicht.

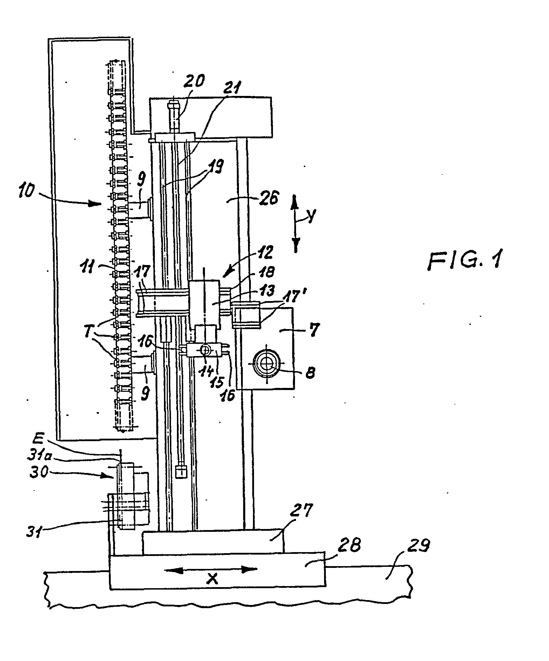

Bei der in den Figuren 1 bis 3 gezeigten Werkzeugmaschine handelt es sich um ein Horizontal-Bohr- und Fräswerk. Ein Ständer 26 ist dabei auf einem Kreuzschlitten 27, 28 angeordnet, derart, daß ein auf einem Bett 29 in der Maschinenachse X verschiebbarer Bettschlitten 28 einen um einen begrenzten Betrag quer dazu, d.h. in der Maschinenachse W, verschiebbaren Schlitten 27 aufweist, der den Ständer 26 trägt.

An einer Seite des Ständers 26 befindet sich ein in Richtung der Maschinenachse Y vertikal verschiebbarer Spindelstock 7 mit einer Arbeitsspindel 8. Diese kann relativ zum Spindelstock in Z-Richtung verschiebbar sein.

Auf der dem Spindelstock 7 abgewandten Seite des Ständers 26 ist mit Halterungen 9 ein Werkzeugmagazin 10 mit einer in bekannter Weise über Umlenkräder od.dgl. geführten und somit umlaufend bewegbaren Kette 11 angebracht. Die Kette bildet Aufnahmeplätze für eine Anzahl von Werkzeugen T. Es kann sich z.B. um 60 solcher Aufnahmeplätze handeln. Der Antrieb der Kette 11 ist in bekannter Weise steuerbar, derart daß ein bestimmtes Werkzeug T zu einem bestimmten Zeitpunkt eine bestimmte position relativ zu einem Bezugspunkt einnimmt.

Zum überführen eines Werkzeuges T aus der Kette 11 in die Arbeitsspindel 8 und umgekehrt ist ein insgesamt mit der Ziffer 12 bezeichneter Wechsler vorgesehen. An einem bei dieser Ausführung als Schlitten 13 ausgebildeten Tragkörper befindet sich ein um die Achse 14 schwenkbarer Doppelarm 15, dessen Enden jeweils mit einer Greiferzange 16 versehen sind, deren steuerbare Bewegungsmöglichkeiten denen bekannter Ausführungen solcher Wechsler entsprechen können.

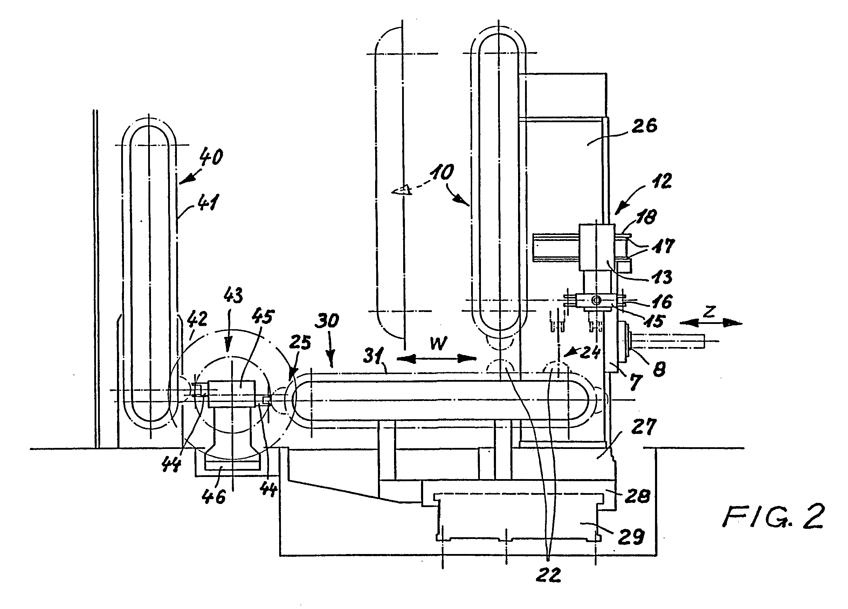

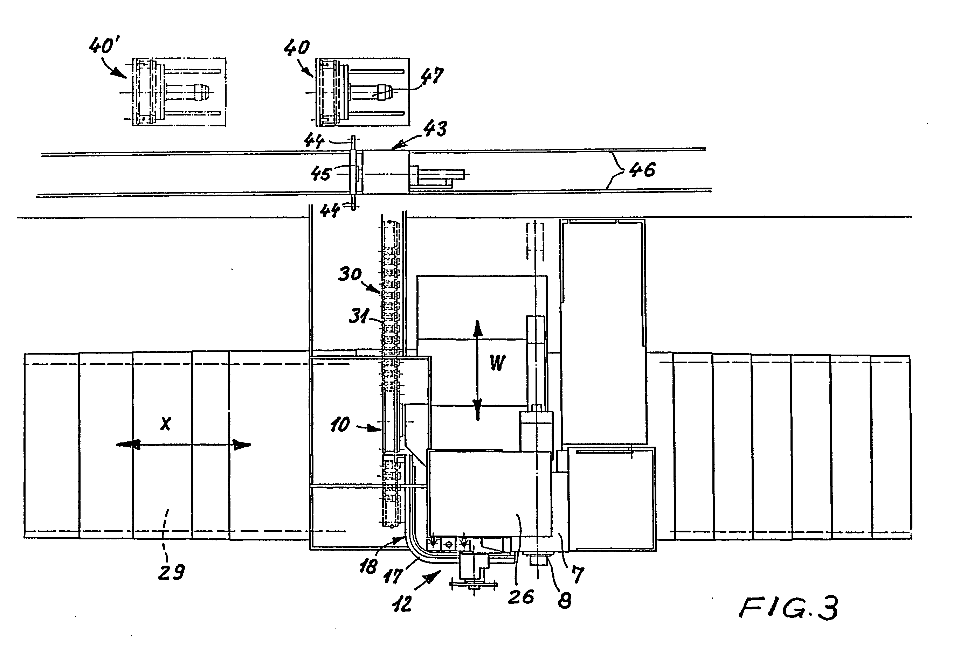

Der Schlitten 13 ist an einem mit Führungen 17 versehenen Tragschlitten 18 angeordnet, derart, daß er mittels eines steuerbaren Antriebs entlang der Führungen 17 verfahren werden kann, wobei sich die Führungen 17 von der Vorderseite des Ständers 26 um dessen vordere Ecke herum noch um einen Betrag parallel zur Kette 11 des Magazins 10 erstrecken, wie insbesondere die Figuren 2 und 3 erkennen lassen. Am Spindelstock 7 befinden sich fest angeordnete Führungen 17', mit denen die Führungen 17 am Tragschlitten 18 zum Fluchten gebracht werden können, so daß der Schlitten 13 dann beim Werkzeugwechsel bis auf die Führungen 17' am Spindelstock 7 fahren kann.

Der Tragschlitten ist bei der dargestellten Ausführung an Rundführungen 19 vertikal verfahrbar, wobei er über einen steuerbaren Motor 20 und eine Antriebsspindel 21 seine Bewegung erhält. Somit ist der Tragschlitten 18 und mit ihm der Wechsler 12 auch unabhängig vom Spindelstock 7 verfahrbar, so daß er während des Arbeitens eines in der Arbeitsspindel 8 befindlichen Werkzeuges ein Werkzeug aus dem Magazin 10 holen oder ein Werkzeug in das Magazin zurückgeben kann.

Unterhalb des vertikalen Ketten-Magazins 10 ist ein horizontales Ketten-Magazin 30 vorgesehen, dessen Kette 31 in üblicher Weise über Kettenräder od.dgl. geführt ist und das Aufnahmeplätze 22 für Werkzeuge T aufweist. Es kann sich z.B. um 70 oder 80 Aufnahmeplätze oder mehr handeln. Dieses horizontale Ketten-Magazin 30 ist am Bettschlitten 28 angebracht, so daß es sich mit dem Ständer nur in der X-Achse bewegt.

Die durch die Umlenkräder und die sich zwischen ihnen erstreckenden Kettenbereiche gehende Ebene E ist vertikal und steht parallel zur Bewegungsebene des Spindelstockes 7 am Ständer 26 und zur Maschinenachse W.

Der Antrieb der Kette 31 des Magazins 30 ist derart steuerbar, daß die Kette 31 nicht nur in vorgebbarer Weise positionierbar ist, um ein bestimmtes Werkzeug bzw. einen bestimmten Aufnahmeplatz 22 zu einem bestimmten Zeitpunkt in eine bestimmte Position zu bringen, sondern daß die Kette 31 weiterhin auch automatisch den Bewegungen des Ständers 26 in Richtung der zur Arbeitsspindel 8 parallelen Maschinenachse W nachführbar ist. Die jeweilige Relativposition zwischen der Kette 31 und dem Ständer 26 bzw. einer übergabestelle 24 bleibt also bei jeder Bewegung des Ständers erhalten. Ein solches Nachführen der Kette kann mittels geeigneter, dem Fachmann zur Verfügung stehender Einrichtungen, z.B. unter Verwendung induktiver Weggeber, bewirkt werden.

Der Wechsler 12 ist in der Lage, Werkzeuge sowohl aus dem vertikalen Magazin 10 als auch aus dem horizontalen Magazin 30 zu entnehmen und in die Arbeitsspindel 8 einzusetzen und umgekehrt.

Der Tragschlitten 18 für den Wechsler 12 ist an seinen Führungen 19 in eine untere Position am Magazin 30 verfahrbar, in der das Entnehmen eines Werkzeuges aus dem Magazin 30 mittels einer Greiferzange 16 am Doppelarm 15 des Wechslers 12 bzw. umgekehrt das Einsetzen eines Werkzeuges in das Magazin mittels des Wechslers möglich ist. Dies ist die übergabestelle 24. Dadurch kann die Arbeitsspindel 8 mit Werkzeugen aus dem Magazin 30 versorgt werden. Weil der Wechsler außerdem mit dem vertikalen Magazin 10 zusammenarbeiten kann, steht eine sehr große Anzahl von Werkzeugen T zum unmittelbaren Zugriff an der Maschine zur Verfügung.

Das horizontale Ketten-Magazin 30 kann an einer bequem erreichbaren Stelle, insbesondere im Bereich 25 in der Nähe seines hinteren Endes, schnell und einfach mit Werkzeugen bestückt werden. Gleiches gilt für das Auswechseln.

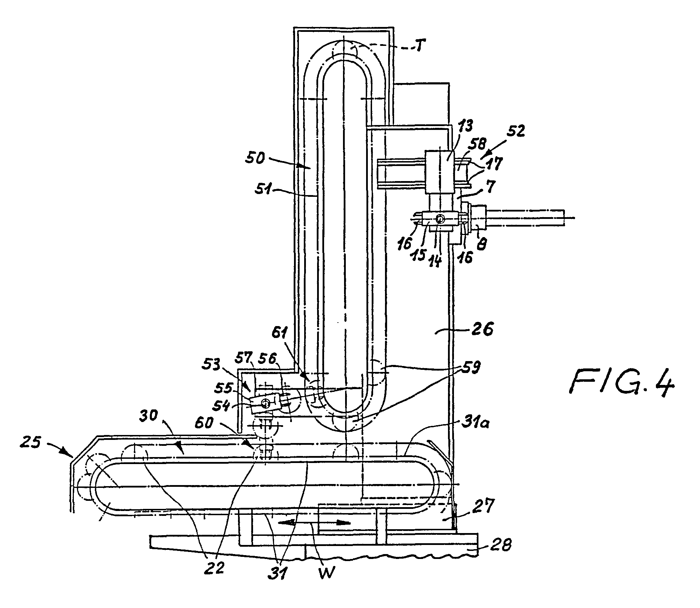

Die in Fig. 4 gezeigte Maschine ist in ihrem Grundaufbau gleich derjenigen nach den Figuren 1 bis 3, so daß einander entsprechende Teile mit den gleichen Bezugszahlen versehen sind und die weiter oben gegebenen Erläuterungen sinngemäß auch hier gelten. Ein horizontales Ketten-Magazin 30 mit Kette 31 ist wie bei der Ausführung nach den Figuren 1 bis 3 am Bettschlitten 28 angebracht.

Am Ständer befindet sich ein vertikales Ketten-Magazin 50 mit einer Aufnahmeplätze 59 für Werkzeuge bilden Kette 51.

Ein Wechsler 52 weist einen Träger 58 mit Führungen 17 für einen Schlitten 13 mit Doppelarm 15 und Greifzangen 16 auf. Der Träger 58 kann am Spindelstock 7 befestigt sein, so daß er sich zusammen mit diesem vertikal am Ständer bewegt. Jedoch kann es sich auch um einen separat vertikal verfahrbaren Wechsler handeln, der für die hier geschilderte Arbeitsweise mit dem Spindelstock zur gemeinsamen Bewegung mit diesem verbunden wird.

Die Kette 51 des Magazins 50 ist den vertikalen Bewegungen des Spindelstockes 7 mit dem Wechsler 52 automatisch nachführbar, so daß eine jeweilige Positionierung eines Aufnahmeplatzes 59 der Kette 51 relativ zum Spindelstock 7 bzw. zu einer vom Schlitten 13 mit den Greifern 16 des Wechslers 52 erreichbaren übergabestelle bei den Verfahrbewegungen des Spindelstockes 7 erhalten bleibt.

Auf der der Arbeitsseite der Maschine abgewandten Seite ist zwischen den beiden Magazinen 30 und 50 eine Werkzeugübergabevorrichtung 53 angeordnet. Diese weist einen schwenkbaren und in Richtung der Schwenkachse 54 verschiebbaren Kopf 55 mit einer Greiferzange 56 auf und ist am Ständer 26 oder einem an diesem befestigten Träger 57 so angebracht, daß sie jeweils ein Werkzeug aus einem Aufnahmeplatz 22 der Kette 31 des Magazins 30 entnehmen und in einen Aufnahmeplatz der Kette 51 des Magazins 50 einsetzen kann und umgekehrt. Das Arbeiten mit dieser übergabevorrichtung 53 und ihr Zusammenworken mit den Ketten der Magazine 30 und 50 ist vorteilhaft so steuerbar, z.B. im Rahmen eines automatischen Programms, daß das Magazin 50 immer die Werkzeuge erhält, die für die nächsten Beareitungsoperationen benötigt werden, während die benutzten Werkzeuge an das Magazin 30 abgegeben werden. Die in dem letzteren befindlichen Werkzeuge können bei Bedarf ander Bestückungsstelle 25 gegen andere ausgetauscht werden. Die übergabestellen an den beiden Magazinen 30 und 50 sind mit den Zahlen 60 und 61 bezeichnet.

Die Kette 31 des Magazins 30 ist den Bewegungen des Ständers 26 in Richtung der Maschinenachse W nachführbar, wie es auch bei der Ausführung nach den Figuren 1 bis 3 der Fall ist, nur mit dem Unterschied, daß hier die gewünschte Positionierung eines bestimmten Aufnahmeplatzes 22 der Kette 31 nicht bezüglich einer Wechsler-übergabestelle erfolgt, sondern hinsichtlich der übergabestelle 60 mit der Werkzeug-übergabevorrichtung 53.

Die Figuren 2 und 3 veranschaulichen außerdem noch eine weitere Möglichkeit, die Anzahl der verfügbaren Werkzeuge bzw. die Vielseitigkeit der Werkzeugdarbietung zu vergrößern. Mit der Ziffer 40 ist ein ortsfest aufgestelltes vertkales Ketten-Magazin bezeichnet, das mit einer größeren Anzahl von Werkzeugen bestückt werden kann und dessen Kette 41 mittels steuerbaren Antriebs 47 in der gewünschten Weise so positioniert werden kann, daß ein bestimmter Aufnahmeplatz bzw. ein bestimmtes darin befindliches Werkzeug zu einem bestimmten Zeitpunkt an einer in Fig. 2 mit der Zahl 42 bezeichneten übergabeposition steht. Eine insgesamt mit der Zahl 43 bezeichnete Werkzeug-übergabevorrichtung ist so zwischen beiden Magazinen 30 und 40 angeordnet, daß mittels der Greifer 44, die verschiebbar an einem schwenkbaren Kopf 45 vorgesehen sind, jeweils ein Werkzeug aus dem Magazin 40 an das Magazin 30 und umgekehrt übergeben werden kann.

Der Ständer 26 ist mittels des Schlittens 28 auf dem Bett 29 in der X-Achse verfahrbar. Um das Magazin 30 in jeder Ständerposition bedienen zu können, ist bei einer solchen Maschinenausführung mit zusätzlichem Magazin 40 zweckmäßig auch die Werkzeug-übergabevorrichtung 43 parallel zur X-Achse verfahrbar, wie dies durch eine schematisch angedeutete Führung 46 veranschaulicht ist. Der Verfahrantrieb kann in der jeweils am besten geeigneten Weise ausgebildet sein. Die Bewegung der Vorrichtung 43 ist dabei vorteilhaft in Abhängigkeit von der Position des Ständers 26 steuerbar. Dies läßt sich mit dem Fachmann zur Verfügung stehenden Mitteln erreichen. Die Vorrichtung 43 kann gleitend verschiebbar oder auch auf Rollen verfahrbar sein.

Es lassen sich je nach Bedarf noch weitere dem Magazin 40 entsprechende Magazine vorsehen, wie dies in Fig. 3 bei der Zahl 40' angedeutet ist. Jedes dieser Magazine kann durch die Vorrichtung 43 bedient werden. Ein oder mehre solcher zusätzlichen Magazine können auch bei Maschinen anderer Bauarten vorgesehen sein.

**Patentansprüche**

1. Werkzeugmaschine, insbesondere Horizontal-Bohr- und Fräswerk, mit drehbarer Arbeitsspindel (8) und mit einer Werkzeugwechselvorrichtung, wobei die Werkzeugmaschine ein Bett (29), einen Ständer (26) und einen vertikal am Ständer verschiebbaren Spindelstock (7) mit der Arbeitsspindel (8) aufweist, und wobei die Werkzeugwechselvorrichtung ein Werkzeugmagazin (30), das an einem in Richtung einer zur Arbeitsspindel (8) parallelen Maschinenachse unverschiebbaren-Teil angeordnet ist, und einen Wechsler (12) enthält, der wenigstens ein Greiforgan hat und mittels dessen jeweils ein Werkzeug (T) aus einem sich an einer übergabestelle befindenden Aufnahmeplatz (22) des Magazins (30) entnehmbar und in die Arbeitsspindel (8) einsetzbar ist und umgekehrt, wobei der Wechsler (12) zumindest zeitweilig unabhängig vom Spindelstock (7) am Ständer (26) vertikal bewegbar ist, dadurch gekennzeichnet, daß das Werkzeugmagazin (30) als Ketten-Magazin horizontal an einem Bettschlitten (28) angeordnet ist, auf dem ein Ständerschlitten (27) mit dem Ständer (26) in einer parallel zur Arbeitsspindel (8) gerichteten Maschinenachse (W) verschiebbar ist, und daß die Kette (31) dieses horizontalen Werkzeugmagazins (30) den Bewegungen des Ständers (26) in Richtung der zur Arbeitsspindel (8) parallelen Maschinenachse (W) nachführbar ist, derart, daß eine jeweilige Positionierung eines Aufnahmeplatzes (22) an der übergabestelle (24) ungeachtet einer Ständerbewegung erhalten bleibt.

2. Werkzeugmaschine nach Anspruch 1, dadurch gekennzeichnet, daß die übergabestelle (24) im Bereich des oberen Trums (31a) der Kette (31) des horizontalen Ketten-Magazins (30) liegt.

3. Werkzeugmaschine nach Anspruch 1 oder 2, dadurch gekennzeichnet, daß der Wechsler (12) einen zwischen der übergabestelle am horizontalen Ketten-Magazin (30) und einer übergabestelle nahe der Arbeitsspindel (8) hin und her bewegbaren Schlitten (18) od.dgl. aufweist.

4. Werkzeugmaschine nach einem der Ansprüche 1 bis 3, dadurch gekennzeichnet, daß außer dem horizontalen Ketten-Magazin (30) am Ständer (26) ein weiteres Werkzeugmagazin (10) vorgesehen ist und der Wechsler (12) zum Arbeiten mit beiden Magazinen (10, 30) eingerichtet ist.

5. Werkzeugmaschine nach Anspruch 4, dadurch gekennzeichnet, daß das weitere Werkzeugmagazin (10) einen beweglichen Teil wie Kette, Trommel oder dergleichen mit Aufnahmeplätzen für Werkzeuge (T) aufweist.

6. Werkzeugmaschine nach Anspruch 4, dadurch gekennzeichnet, daß das weitere Werkzeugmagazin einen festen Teil, wie Leiste oder dergleichen mit Aufnahmeplätzen für Werkzeuge (T) aufweist.

7. Werkzeugmaschine, insbesondere Horizontal-Bohr- und Fräswerk, mit drehbarer Arbeitsspindel (8) und mit einer Werkzeugwechselvorrichtung, wobei die Werkzeugmaschine ein Bett (29), einen Ständer (26) und einen vertikal am Ständer verschiebbaren Spindelstock (7) mit der Arbeitsspindel (8) aufweist, und wobei die Werkzeugwechselvorrichtung ein Werkzeugmagazin (30), das an einem in Richtung einer zur Arbeitsspindel (8) parallelen Maschinenachse unverschiebbaren Teil angeordnet ist, und einen Wechsler (52) enthält, der wenigstens ein Greiforgan hat und mittels dessen jeweils ein Werkzeug (T) aus einem sich an einer übergabestelle befindenden Werkzeug-Aufnahmeplatz entnehmbar und in die Arbeitsspindel (8) einsetzbar ist und umgekehrt, wobei der Wechsler (52) zumindest zeitweilig am Spindelstock (7) gehalten ist, dadurch gekennzeichnet, daß das Werkzeugmagazin (30) als Ketten-Magazin horizontal an einem Bettschlitten (28) angeordnet ist, auf dem ein Ständerschlitten (27) mit dem Ständer (26) in einer parallel zur Arbeitsspindel (8) gerichteten Maschinenachse (W) verschiebbar ist, daß außer diesem horizontalen Ketten-Magazin (30) am Ständer (26) ein vertikales Ketten-Magazin (50) angeordnet ist, daß der Wechsler (52) zum Arbeiten mit dem vertikalen Ketten-Magazin (50) eingerichtet ist, dessen Kette (51) den Bewegungen des Spindelstockes (7) mit dem Wechsler (52) nachführbar ist, derart, daß eine jeweilige Positionierung eines Aufnahmeplatzes relativ zum Spindelstock (7) ungeachtet einer Bewegung des letzteren erhalten bleibt, und daß zwischen dem horizontalen Ketten-Magazin (30) und dem vertikalen Ketten-Magazin (50) eine Werkzeug-übergabevorrichtung (53) angeordnet ist, mittels derer Werkzeuge (T) aus einem in das andere Magazin überführbar sind, wobei die Werkzeugübergabevorrichtung (53) am Ständer (26) oder einem sich mit diesem bewegenden Teil angebracht ist und die Kette (31) des horizontal Werkzeugmagazins (30) den Bewegungen des Ständers (26) in Richtung der zur Arbeitsspindel (8) parallelen Maschinenachse (W) nachführbar ist, derart, daß eine jeweilige Positionierung eines Aufnahmeplatzes (22) relativ zur Werkzeug-übergabevorrichtung (53) ungeachtet einer Ständerbewegung erhalten bleibt.

8. Werkzeugmaschine nach Anspruch 7, dadurch gekennzeichnet, daß die Werkzeug-übergabevorrichtung (53) auf der der Arbeitsseite der Maschine abgewandten Seite angeordnet ist.

9. Werkzeugmaschine nach einem der Ansprüche 1 bis 8, dadurch gekennzeichnet, daß das horizontale Ketten-Magazin (30) auf der dem Spindelstock (7) abgewandten Seite des Ständers (26) angeordnet ist.

10. Werkzeugmaschine nach einem der Ansprüche 1 bis 9, gekennzeichnet durch wenigstens ein weiteres Werkzeugmagazin (40) in Form eines Ketten-, Trommel- oder Regalmagazins od.dgl. in der Nähe des hinteren Endes (25) des horizontalen Ketten-Magazins (30) und durch eine zwischen den Magazinen (30 und 40) angeordnete Werkzeug-übergabevorrichtung (43).

11. Werkzeugmaschine nach Anspruch 10, dadurch gekennzeichnet, daß die Werkzeug-übergabevorrichtung (43) in einer Richtung parallel zu einer quer zur Arbeitsspindel verlaufenden Maschinenachse (X) bewegbar ist.

12. Werkzeugmaschine nach einem de Ansprüche 10 und 11, dadurch gekennzeichnet, daß die Werkzeug-übergabevorrichtung (43) einen höhenverstellbaren Teil aufweist.

13. Werkzeugmaschine nach einem der Ansprüche 11 und 12, dadurch gekennzeichnet, daß die Werkzeug-übergabevorrichtung (43) und der das horizontale Ketten-Magazin (30) tragende Teil zeitweise synchron bewegbar sind.

**Revendications**

1. Machine-outil, notamment aléseuse-fraiseuse horizontale, comprenant une broche rotative (8) et un dispositif de changement d'outil, la machine-outil comportant un socle (29), un montant (26) et une poupée porte-broche (7) agencée de façon à pouvoir coulisser verticalement sur le montant et portant la broche (8), tandis que le dispositif de changement d'outil comprend un magasin d'outils (30), qui est disposé sur une pièce ne pouvant pas coulisser suivant un axe de la machine parallèle à la broche (8), et un changeur (12) qui comporte au moins un organe de préhension et à l'aide duquel chaque outil (T) peut être prélevé en un emplacement d'outil (22) du magasin (30) qui se trouve dans une position de transfert, puis placé dans la broche (8), et vice versa, le changeur (12) étant, au moins temporairement, mobile verticalement sur le montant (26) d'une manière indépendante du porte-broche (7), caractérisée en ce que le magasin d'outils (30), formé d'un magasin à chaîne, est disposé horizontalement sur un chariot de socle (28) sur lequel un chariot de montant (27), portant le montant (26), peut coulisser suivant un axe de machine (W) orienté parallèlement à la broche (8) et que la chaîne (31) de ce magasin d'outils horizontal (30) est agencée de façon à pouvoir suivre les déplacements du montant (26) suivant la direction de l'axe de machine (w) parallèle à la broche (8), de sorte que tout positionnement qui a été fixé Pour un emplacement d'outil (22) à la position de transfert (24) reste conservé malgré un déplacement du montant.

2. Machine-outil suivant la revendication 1, caractérisée en ce que la position de transfert (24) se trouve dans la zone du brin supérieur (31a) de la chaîne (31) du magasin à chaîne horizontal (30).

3. Machine-outil suivant l'une des revendications 1 et 2, caractérisée en ce que le changeur (12) comprend un chariot (18), ou analogue, mobile en va-et-vient entre la position de transfert du magasin à chaîne horizontal (30) et une position de transfert contiguë à la broche (8).

4. Machine-outil suivant l'une des revendications 1 à 3, caractérisée en ce qu'un autre magasin d'outils (10) est prévu sur le montant (26) en plus du magasin à chaîne horizontal (30) et en ce que le changeur (12) est agencé de façon à coopérer avec les deux magasins (10, 30).

5. Machine-outil suivant la revendication 4, caractérisée en ce que l'autre magasin d'outils (10) comprend une pièce mobile, telle que chaîne, tambour ou analogue, comportant des emplacements pour les outils (T).

6. Machine-outil suivant la revendication 4, caractérisée en ce que l'autre magasin d'outils comprend une pièce fixe, telle que barre ou analogue, comportant des emplacements pour les outils (T).

7. Machine-outil, notamment aléseuse-fraiseuse horizontale, comprenant une broche rotative (8) et un dispositif de changement d'outil, la machine-outil comportant un socle (29), un montant (26) et une poupée porte-broche (7) agencée de façon à pouvoir coulisser verticalement sur le montant et portant la broche (8), tandis que le dispositif de changement d'outil comprend un magasin d'outils (30), qui est disposé sur une pièce ne pouvant pas coulisser suivant un axe de la machine parallèle à la broche (8), et un changeur (52) qui comporte au moins un organe de préhension et à l'aide duquel chaque outil (T) peut être prélevé en un emplacement d'outil (22) qui se trouve dans une position de transfert, puis placé dans la broche (8), et vice versa, le changeur (52) étant, au moins temporairement, maintenu fixe sur le porte-broche (7), caractérisée en ce que le magasin d'outils (30), formé d'un magasin à chaîne, est disposé horizontalement sur un chariot de socle (28) sur lequel un chariot de montant (27), portant le montant (26), peut coulisser suivant un axe de machine (W) orienté parallèlement à la broche (8), en ce qu'un magasin à chaîne vertical (50) est disposé sur le montant (26) en plus de ce magasin à chaîne horizontal (30), en ce que le changeur (52) est agencé de façon à coopérer avec le magasin à chaîne vertical (50) dont la chaîne (51) est agencée de façon à pouvoir suivre les déplacements communs au porte-broche (7) et au changeur (52), de sorte que tout positionnement qui a été fixé pour un emplacement d'outil par rapport au porte-broche (7) reste conservé malgré un déplacement de ce dernier, et en ce que, entre le magasin à chaîne horizontal (30) et le magasin à chaîne vertical (50), il est disposé un dispositif de transfert d'outil (53) à l'aide duquel des outils (T) peuvent être transférés d'un magasin à l'autre et qui est fixé sur le montant (26) ou sur une pièce se déplaçant avec celui-ci, tandis que la chaîne (31) du magasin d'outils horizontal (30) est agencée de façon à pouvoir suivre les déplacements du montant (26) suivant la direction de l'axe de machine (W) parallèle à la broche (8)' de sorte que tout positionnement qui a été fixé pour un emplacement d'outil (22) par rapport au dispositif de transfert d'outil (53) reste conservé malgré un déplacement du montant.

8. Machine-outil suivant la revendication 7, caractérisée en ce que le dispositif de transfert d'outil (53) est disposé du côté de la machine opposé à son côté de travail.

9. Machine-outil suivant l'une des revendications 1 à 8, caractérisée en ce que le magasin à chaîne horizontal (30) est disposé sur le côté du montant (26) opposé au porte-broche (7).

10. Machine-outil suivant l'une des revendications 1 à 9, caractérisée par au moins un autre magasin d'outils (40), formé d'un magasin à chaîne, à tambour ou à tablettes ou analogue et contigu à l'extrémité arrière (25) du magasin à chaîne horizontal (30), et par un dispositif de transfert d'outil (43) disposé entre les magasins (30, 40).

11. Machine-outil suivant la revendication 10, caractérisée en ce que le dispositif de transfert d'outil (43) est mobile suivant une direction parallèle à un axe de machine (X) orienté transversalement à la broche.

12. Machine-outil suivant l'une des revendications 10 et 11, caractérisée en ce que le dispositif de transfert d'outil (43) comprend une pièce dont la position est réglable en hauteur.

13. Machine-outil suivant l'une des revendications 11 et 12, caractérisée en ce que le dispositif de transfert d'outil (43) et la pièce portant le magasin à chaîne horizontal (30) sont mobiles en synchronisme d'une manière temporaire.

**Claims**

1. A machine tool, more particularly a horizontal boring and milling machine, with a rotatable work spindle (8) and with a tool changing device, the machine tool comprising a bed (29), an upright (26) and a headstock (7) which is vertically displaceable on the upright with the work spindle (8), the tool changing device comprising a tool magazine (30) arranged on a part which is non-displaceable in the direction of a machine axis parallel to the work spindle (8), and a changer (12), which comprises at least one gripping member and by means of which a tool (T) can be removed from a receiving point (22) of the magazine (30) located at a transfer site and can be inserted in the work spindle (8) and vice versa, the changer (12) being at least at times vertically displaceable on the upright (26) independently of the headstock (7), characterised in that the tool magazine (30) is arranged horizontally as a chain magazine on a bed carriage (28), on which an upright carriage (27) can be displaced with the upright (26) along a machine axis (W) parallel to the work spindle (8), and in that the chain (31) of this horizontal tool magazine (30) can follow the movements of the upright (26) in the direction of the machine axis (W) parallel to the work spindle (8) in such a manner that a respective positioning of a receiving point (22) at the transfer site (24) is maintained independently of a movement of the upright.

2. A machine tool according to claim 1, characterised in that the transfer site (24) lies in the region of the upper strand (31a) of the chain (31) of the horizontal chain magazine (30).

3. A machine tool according to claim 1 or 2, characterised in that the changer (12) comprises a carriage (18) or the like, which can be moved back and forth between the transfer site on the horizontal chain magazine (30) and a transfer site in the vicinity of the work spindle (8).

4. A machine tool according to one of claims 1 to 3, characterised in that in addition to the horizontal chain magazine (30), a further tool magazine (10) is provided on the upright (26) and the changer (12) is designed for operation with both magazines (10, 30).

5. A machine tool according to claim 4, characterised in that the further tool magazine (10) comprises a movable part such as a chain, drum or the like with receiving points for tools (T).

6. A machine tool according to claim 4, characterised in that the further tool magazine comprises a stationary part, such as a strip or the like with receiving points for tools (T).

7. A machine tool, more particularly a horizontal boring and milling machine, with a rotatable work spindle (8) and with a tool changing device, the machine tool comprising a bed (29), an upright (26) and a headstock (7) which is vertically displaceable on the upright with the work spindle (8), the tool changing device comprising a tool magazine (30) arranged on a part which is non-displaceable in the direction of a machine axis parallel to the work spindle (8), and a changer (52), which comprises at least one gripping member and by means of which a tool (T) can be removed from a receiving point located at a transfer point and can be inserted in the work spindle (8) and vice versa, the changer (52) being at least temporarily held on the headstock (7), characterised in that the tool magazine (30) is arranged horizontally as a chain magazine on a bed carriage (28), on which an upright carriage (27) can be displaced with the upright (26) along a machine axis (W) parallel to the work spindle (8), in that in addition to this horizontal chain magazine (30) a vertical chain magazine (50) is arranged on the upright (26) in that the changer (52) is designed for operation with the vertical chain magazine (50), whose chain (51) can follow the movements of the headstock (7) with the changer (52) in such a manner that a respective positioning of a receiving point relative to the headstock (7) is maintained independently of a movement of the said headstock (7), and in that a tool transfer device (53) is arranged between the horizontal chain magazine (30) and the vertical chain magazine (50), by means of which tools (T) can be transferred from one magazine into the other, the tool transfer device (53) being arranged on the upright (26) or on a part movable with the said upright and the chain (31) of the horizontal tool magazine (30) can follow the movements of the upright (26) in the direction of the machine axis (W) parallel to the work spindle (8) in such a manner that a respective positioning of a receiving point (22) relative to the tool transfer device (53) is maintained independently of a movement of the upright.

8. A machine tool according to claim 7, characterised in that the tool transfer device (53) is arranged on the side facing away from the working side of the machine.

9. A machine tool according to one of claims 1 to 8, characterised in that the horizontal chain magazine (30) is arranged on the side of the upright (26) facing away from the headstock (7).

10. A machine tool according to one of claims 1 to 9, characterised by at least one further tool magazine (40) in the form of a chain, drum or rack magazine or the like in the vicinity of the rear end (25) of the horizontal chain magazine (30) and by a tool transfer device (43) arranged between the magazines (30 and 40).

11. A machine tool according to claim 10, characterised in that the tool transfer device (43) is movable in a direction parallel to a machine axis (X) extending transverse to the work spindle.

12. A machine tool according to one of claims 10 and 11, characterised in that the tool transfer device (43) comprises a height-adjustable part.

13. A machine tool according to one of claims 11 and 12, characterised in that the tool transfer device (43) and the part supporting the horizontal chain magazine (30) can be moved synchronously at times.

FIG. 1

FIG. 2

FIG.3

FIG.4